# EUROPÄISCHE PATENTSCHRIFT

(11) **EP 2 266 754 B1**
(45) Veröffentlichungstag und Bekanntmachung des Hinweises auf die Patenterteilung: **31.08.2016**
(21) Anmeldenummer: 10183225.1
(22) Anmeldetag: 10.12.1997
(51) Int. Cl.: B24B 13/005, B24B 9/14, B24B 41/06

(54) **Vakuumspannfutter zum Haltern eines Brillenrohlings**
Vacuum chuck for holding a spectacle lens blank
Mandrin à succion pour fixer une ébauche de verre à lunette

(30) Priorität: 16.01.1997 DE 19701312
(43) Veröffentlichungstag der Anmeldung: 29.12.2010
(62) Teilanmeldung aus: 06003745.4
(73) Patentinhaber: Carl Zeiss Vision GmbH, 73430 Aalen (DE)
(72) Erfinder: Hof, Albrecht, 73430 Aalen (DE); Hanßen, Adalbert, 73434 Aalen (DE)
(74) Vertreter: Glawe, Delfs, Moll

(56) Entgegenhaltungen:
- EP-A2- 0 103 217
- EP-A2- 0 281 754
- EP-A2- 0 307 874
- DE-A1- 2 531 134
- DE-A1- 3 924 078
- JP-A- 3 121 763
- US-A- 3 134 208
- US-A- 4 089 102
- US-A- 4 938 489
- US-A- 5 161 846

## Beschreibung

Die Erfindung betrifft ein Vakuumspannfutter zum Haltern eines Brillenrohlings nach dem Oberbegriff des Patentanspruchs 1.

Brillenlinsen unterteilen sich in solche mit einem einzigen Brechwert und solche mit mehreren, aber mindestens zwei verschiedenen Brechwerten. Die unterschiedlichen Brechwerte dienen dazu, dem Benutzer mit eingeschränktem oder gestörtem Akkomodationsvermögen zumindest im Nah- und Fernbereich einwandfreies Sehen zu ermöglichen.

Die unterschiedlichen Brechwerte können in diskreten Schritten auftreten (Bifokal, Trifokal) oder im gleitenden Übergang als Gleitsichtfläche.

Aus fertigungstechnischen und ästhetischen Gründen werden derzeit Flächen mit variablem Brechwert vorzugsweise auf der Vorderseite einer Brillenlinse angebracht. Man arbeitet mit einer beschränkten Anzahl von Mehrstärkenflächen (Gleitsichtflächen), da beim Feinschleifen oder Polieren für jede zu fertigende Flächenart ein individuelles Werkzeug erforderlich ist. Diese Werkzeuge müssen für jede Flächenart erzeugt, bevorratet und gewartet werden.

Um trotzdem für jeden Benutzer die richtige dioptrische Wirkung (sphärisch, astigmatisch und prismatisch) wenigstens in bestimmten Punkten auf der Brillenlinse (insbesondere in den Bezugspunkten Ferne und Nähe) zu erreichen, wird die Rückfläche der Brillenlinse in der Regel mit einer sphärischen oder torischen Rezeptfläche versehen, die mit herkömmlichen Maschinen der Optikbearbeitung hergestellt wird. Eine stärkere torische Wirkung auf der Vorderseite einer Brillenlinse sieht sehr unschön aus.

Dabei wird die Brillenlinse im gegenwärtigen Sprachgebrauch durch diejenigen Werte für Sphäre, Astigmatismus und Prisma beschrieben, die die Brillenlinse im Fern- und Nahbezugspunkt erreicht. In allen anderen Punkten auf der Brillenlinse können davon abweichende Werte festgestellt werden, so daß die dioptrische Wirkung durch Funktionen in x-, y-Koordinaten beschrieben werden kann.

Es ist bekannt, daß Brillenglasflächen mit Mehrstärkenwirkung nur für die Entwurfskonstellation optimale Korrekturergebnisse zeigen. Benutzt man eine Mehrstärkenfläche mit einer von der Entwurfskonstellation abweichenden Rezeptfläche, kommt es zu Einbußen bei der Bildqualität. Um diese zu vermeiden ist z.B. in Offenlegungsschrift DE 42 10 008 A1 ein Verfahren beschrieben, bei dem eine zusätzliche Freiformfläche mit kleinen Abweichungen von der Sphäre/Torus auch auf die Rückseite aufgebracht wird.

Erweiterte fertigungstechnische Möglichkeiten, insbesondere eine Direktbearbeitung mit Fast-Tool-Servo zur Fertigung von Kunststoffbrillenlinsen, ermöglichen es, gebrauchsfähige optische Oberflächen auch mit stark unsymmetrischer Form herzustellen. Dabei sind keine weiteren oder nur sehr kurze Arbeitsgänge mit flächigem Werkzeug (Polieren) notwendig. Es müssen keine speziell auf eine Fläche abgestimmten Werkzeuge benutzt werden. Deshalb kann man mit dieser neuen Technik mit einer kleinen Zahl von Werkzeugen eine große Zahl unterschiedlicher Flächen erzeugen, was bisher nicht so war.

Alternativ können auch Verfahren benutzt werden, bei denen ein Werkzeug mit geometrisch definierter (Fräsen) oder geometrisch undefinierter (Schleifen) Schneide mit dem Werkstück lokal im Eingriff ist.

In der US 2,878,721 wird eine Multifocus-Brillenlinse beschrieben, bei welcher die Multifocus-Fläche bevorzugt auf der Rückseite, d.h. der augenzugewandten Seite des Brillenglases, liegt. Die andere Fläche hat eine sphärische, torische oder zylindrische Form. Die Multifocus-Fläche wird in Form von gebietsweise definierten Polynomen beschrieben, die an den Schnittstellen mindestens 1. Ableitungen stetig, möglichst auch 2. Ableitungen p, q, r, s, t stetig haben. Um eine konkave Fläche zu erhalten, wie sie üblicherweise für eine Brillenglasinnenseite erforderlich ist, wird eine sphärische, torische oder zylindrische Fläche zu der Multifocus-Fläche addiert, so daß die Wirkung z.B. 6 dpt. in einem Bereich erreicht wird. Die Adaption an den individuellen Nutzer wird ausdrücklich mit der 1. Fläche durchgeführt.

In Spalte 9, Zeile 47 ff. wird ausdrücklich die Addition von verschiedenen Flächenanteilen beschrieben. Von einer Optimierung der Oberflächen an individuelle Gegebenheiten ist keine Andeutung vorhanden.

In der DE 18 05 561 wird eine Brillenlinse mit starker Brechkraft und vorgegebenem Astigmatismus beschrieben. Es wird eine Methode angegeben, wie man mit Hilfe von Ellipsenschnitten den Astigmatismus korrigiert. Die Korrekturstrategie wird auf segmentierte Flächen erweitert, deren Segmente unterschiedliche Brechkräfte besitzen. Im einfachsten Fall erhält man ein Bifokalglas, der Übergang zum Gleitsichtglas wird durch Heraufsetzen der Sektorenzahl realisiert.

Die sektorierte Fläche wird auf die Vorder- oder Rückseite aufgebracht. Der Astigmatismus kann auf der Vorder- oder Rückseite berücksichtigt werden. Die sektorierte Fläche wird entweder auf eine Sphäre oder einen Torus/Zylinder aufgebracht. Es wird auf "Drehen" als Herstellverfahren Bezug genommen und von einer Sphäre als Startfläche ausgegangen. Man erhält eine rotationssymmetrische Asphäre. Die Anpassung auf den individuellen Gebrauchsfall wird nicht diskutiert.
In der DE 42 10 008 A1 wird eine Brillenlinse mit einer Mehrstärkenfläche und einer Freiform-Rezeptfläche beschrieben.

In dem Bericht von Guilino, Barth, Neue progressive Flächen, DOZ, 11. Nov. 1980, S. 20 ff. wird der Aufbau einer Gleitsichtfläche mit Hilfe von Kegelschnitten beschrieben. Es ist bekannt, dass die beschriebenen Flächen auf die Glasvorderseite aufgebracht wurden/werden. Die Rückseite wird zur Anpassung auf den individuell Fall mit Sphäre oder Torus/Zylinder gestaltet.

Aus dem Stand der Technik ist es bekannt, den Linsenrohling mit Hilfe von niedrigtemperaturschmelzenden Schwermetalllegierungen aufzublocken und die Linse so eine Bearbeitung ermöglichend zu haltern.

Aus der EP 0 169 931 A1 ist es weiter bekannt, ein Aufnahmefutter für die Aufnahme von optischen Linsen und anderen optischen Bauelementen beim Feinschleifen und Polieren vorzusehen. Die zu bearbeitenden Linsen werden von einer Membrane unterstützt, die in Stützzonen unterteilt ist. Jede Stützzone kann unabhängig von der anderen Stützzone unterhalb der Membrane mit einem bestimmten Luftdruck beaufschlagt werden. Zu diesem Zweck ist jeder Stützzone ein eigenes Kanalsystem zugeordnet.

Obwohl sich die beiden o. a. Vorrichtungen zum Haltern von Linsen dem Grunde nach bewährt haben, besteht weiter Verbesserungsbedarf.

JP 3 121763 A zeigt ein Vakuumspannfutter zum Halten eines Linsenrohlings, wobei die Anlagefläche mehrere, ineinander gesteckte und relativ zueinander verschiebbare Zylinder umfasst.

DE 25 31 134 A1 zeigt ein Vakuumspannfutter zum Halten eines Brillenlinsenrohlings mit einer an die Form der Vorderseite des Brillenlinsenrohlings angepassten Anlagefläche, wobei die Linse auf flexiblen Dichtungsringen aufliegt, nicht direkt auf der Anlagefläche.

US 3 134 208 A zeigt ein Vakuumspannfutter zum Halten eines Linsenrohlings mit einer an die Form der Vorderseite des Linsenrohlings angepassten Anlagefläche. Die Anlagefläche weist ringförmige Sicken und radiale Vertiefungen auf, die evakuiert werden können.

US 4 089 102 A zeigt ein Vakuumspannfutter zum Halten eines Linsenrohlings mit einer an die Form der Vorderseite des Linsenrohlings angepassten Anlagefläche.

DE 39 24 078 A1 zeigt ein Vakuumspannfutter zum Halten eines Linsenrohlings mit einer an die Form der Vorderseite des Linsenrohlings angepassten Anlagefläche, wobei die Linse auf flexiblen Dichtungsringen aufliegt, nicht direkt auf der Anlagefläche.

US 4 938 489 A und US 5 161 846 A zeigen jeweils einen selbst-zentrierenden Halter für optische Bauteile, wobei ein optisches Bauteil zwischen drei radial nach innen bewegbare Arme eingespannt werden kann.

Die Aufgabe der Erfindung besteht folglich darin, ein Vakuumspannfutter bereitzustellen, welches fertigungstechnisch besonders vorteilhaft ausgebildet ist.

Diese Aufgabe wird durch ein Vakuumspannfutter mit den Merkmalen des Hauptanspruchs gelöst.

Vorteilhafte Ausführungen und Weiterbildungen der Erfindung sind in den Unteransprüchen angegeben.

Das Vakuumspannfutter gemäß der Erfindung eignet sich besonders zur Halterung von Brillenlinsen der nachfolgend beschriebenen Art:
Abweichend von der allenthalben praktizierten Lösung für Brillengläser mit multifokaler Wirkung hat bei der nachfolgend beschriebenen Brillenlinse die Vorderseite der Brillenlinse immer eine sphärische Fläche. Durch diese Fläche wird im wesentlichen die Durchbiegung der fertigen Brillenlinse bestimmt.

Die Rückseite ist eine individuell optimierte multifokale Rezeptfläche, die die dioptrischen Korrekturanforderungen hinsichtlich sphärischer, astigmatischer und prismatischer Wirkung für die jeweils rezeptierte Gebrauchsbedingung erfüllt. Dazu gehört insbesondere die bei Altersfehlsichtigkeit erforderliche stärkere Wirkung im Nahbereich.

Diese neuartige Brillenlinse besitzt eine sphärische Vorderseite und eine neuartig ausgestaltete multifokale Rückseite (Rezeptfläche).

Es werden alle individuellen Anforderungen des Brillenrezepts, bestehend aus sphärischer und astigmatischer und prismatischer Wirkung und deren Verteilung in x, y über der Brillenlinse durch die Rezeptfläche erfüllt.

Interessant ist insbesondere die Möglichkeit, auch torische Wirkungen zusammen mit multifokaler Wirkung auf der Rückseite unterzubringen.

Wegen der ungünstigen ästhetischen Beurteilung wird keine der notwendigen individuellen Anforderungen des Brillenrezepts auf der Vorderseite der Brillenlinse realisiert.

Diese Brillenlinse besitzt auf der Brillenlinsenrückseite keine Punkt- und/oder Achsensymmetrie und hat aber multifokale Eigenschaften.

Vorteilhafterweise hat die Brillenlinse eine Rückfläche, die sich aus der Addition eines sphärischen oder torischen Wirkungsanteils mit einem Bifokal-, Trifokal- oder Gleitsichtanteil ergibt.

Es ist vorteilhaft, wenn ausgehend von vorher bestimmten Startflächen eine individuelle Optimierung der dioptrischen Werte (Sphäre, Astigmatismus, Prisma) auf der dem Auge zugewandten Fläche des Brillenglases erfolgt, wobei die Zielfunktionen für Sphäre, Astigmatismus und Prisma oder daraus abgeleitete Funktionen und deren Gewichte in Anlehnung an die beim Design der Startflächen erzielten Ergebnisse gewählt werden. Häufig optimiert man ein Brillenglas in endlich vielen Punkten, die dicht genug liegen, damit das Design auch zwischen den Punkten stimmt. Bei Optimierung an endlich vielen Punkten kann man das Problem linearisieren und als überbestimmtes Gleichungssystem unter Verwendung kleinster Fehlerquadrate lösen. Es ist auch möglich, eine Optimierung an allen Punkten durchzuführen. Das heißt dann aber, daß man Fehlerintegrale lösen und Methoden der Variationsrechnung verwenden muß. Eine Optimierung in endlich vielen, dicht beieinander liegenden Punkten ist sehr viel einfacher als eine Optimierung in allen Punkten der Fläche und liefert vergleichbare Ergebnisse.

Vorteilhaft kann auch bei der Optimierungsrechnung die prismatische Nebenwirkung nach Anforderung für beidäugiges Sehen individuell ausgeglichen werden, wobei mögliche unterschiedliche dioptrische Wirkungen für das rechte und linke Auge berücksichtigt werden.

Der individuelle Pupillenabstand ist vorteilhafterweise in die Optimierungsrechnung einbezogen.

Ein neuartiges Verfahren zur Herstellung von Brillenlinsen mit multifokaler Wirkung zeichnet sich dadurch aus, daß die Varianten einer ersten oder einiger weniger Brillenlinse(n), die gemäß vorher durchgeführter Designüberlegungen entstanden ist (sind), aus Halbfabrikaten mit sphärischen konvexen Vorderflächen mit ca. 10 unterschiedlichen Radien so hergestellt werden, daß die gesamte individuell erforderliche dioptrische Wirkungsanpassung mit einer Freiformfläche auf der dem Auge zugewandten Seite der Brillenlinse erfolgt, deren Form aus einer Optimierungsrechnung mit den Designerergebnissen als Optimierungsstart folgt.

Dabei ist es vorteilhaft, wenn ausgehend von vorher bestimmten Startflächen eine individuelle Optimierung der Freiformfläche vorgenommen wird, so daß die dioptrischen Rezeptwerte (Sphäre, Astigmatismus, Prisma) in den Meßpunkten erreicht werden. Die Ähnlichkeit der entstehenden Fläche mit der Startfläche wird über die Startfläche selbst, die Form der diskreten oder kontinuierlichen Zielfunktionen und der diskreten oder kontinuierlichen Gewichtsfunktionen sichergestellt.

Desweiteren ist es vorteilhaft, wenn zur Aufnahme der Rohlinge mit sphärischen konvexen Vorderflächen zur Bearbeitung der Rückseite eine entsprechend der Anzahl der Vorderflächenradien gleiche Anzahl passender Halterungen vorhanden ist, so daß die Halterung ohne weitere Hilfsstoffe erfolgt.

Die Erfindung wird nachfolgend an Anwendungsbeispielen unter Zuhilfenahme von Figuren näher erläutert.

Dabei zeigen:
- Figur 1: eine schematische Darstellung zur Standardpupillendistanz;
- Figur 2a: ein Vakuumspannfutter in Aufsicht; und
- Figur 2b: ein Vakuumspannfutter in seitlicher Ansicht mit aufgelegter Brillenlinse.
- Figur 3: eine schematische Darstellung der neuartigen Brillenlinse vor dem Auge des Nutzers;
- Figur 4a: eine Darstellung der astigmatischen Abweichung der neuartigen Brillenlinse; und
- Figur 4b: eine Darstellung der sphärischen Abweichung der neuartigen Brillenlinse.

Im einem ersten Beispiel zu dieser Erfindung werden die derzeit auf Vorder- und Rückseite einer Brillenlinse verteilten dioptrischen Wirkungen von Gleitsichtfläche oder Bifokalfläche oder Trifokalfläche und sphärischer und torischer Rückfläche addiert und auf die Rückseite aufgebracht, wobei die Wirkung der sphärischen Vorderseite berücksichtigt wird.

In einem zweiten Beispiel wird ein Anforderungsprofil an das Brillenglas formuliert, bestehend aus dioptrischen Soll-Wirkungen (sphärisch, astigmatisch, prismatisch) in verschiedenen über das Glas verteilten Punkten oder auch ganzflächig. Dies schließt die Soll-Wirkung im Fern- und Nahbezugspunkt ein.

Die prismatische Wirkung gibt man in der Regel nur in einem oder wenigen Punkten vor. Das Anforderungsprofil kann durch Funktionen über x und y oder als Liste von Wirkungen an endlich vielen Punkten gegeben sein.

Für die Zielvorgaben wird eine individuelle Optimierung der Rezeptfläche durchgeführt, so daß die Zielvorgaben im Sinne eines Best-Fit erreicht werden. In der berechneten Lösung sind die Einzelanteile Sphäre, Torus/Zylinder, Prisma in verschiedenen Bereichen auf dem Brillenglas unterschiedlich. Diese Eigenschaft wird nur durch die Formgebung der Rückfläche erreicht.

Die Vorderseite ist sphärisch.

Bei der Lösung der Optimierungsaufgabe müssen wie üblich Startwerte vorgegeben werden, Das soll dadurch geschehen, daß man
ein für einen im Parametergebiet in der Nähe liegenden Gebrauchsfall entworfenes Design, an verschiedenen, nicht zu dicht liegenden Stützpunkten, mit definierter sphärischer, astigmatischer und prismatischer Wirkung als Startwerte vorgibt.

Ein solches Startdesign berücksichtigt zweckmäßigerweise ebenfalls den für ungestörtes beidäugiges Sehen erforderlichen Ausgleich prismatischer Nebenwirkungen, vor allem derjenigen in vertikaler Richtung, so wie es in DE-PS 30 16 935 beschrieben ist.

Diese Vorgaben werden mit einer bestimmten Gewichtung der einzelnen Zielgrößen in einem separaten vorgelagerten Designschritt berechnet und im Rechner abgespeichert. Man kann nun für jeden individuellen Gebrauchsfall eine erneute Optimierung berechnen, die zu einer Anpassung der Startfläche an das individuelle Rezept führt, wobei die Ähnlichkeit der entstehenden Fläche mit der Designfamilie über die Startflächen, die Form der Zielfunktionen und die Gewichtsfunktionen sichergestellt ist.

Bei Übergang vom Fern- in den Nahsichtbereich treten zwangsweise Bildfehler auf. Diese über das Glas vorteilhaft zu verteilen, ist der eigentliche Designprozeß. Durch das hier vorgestellte Verfahren wird das im Designprozeß erreichte Minimum der auftretenden Bildfehler mit einer einzigen frei gestaltbaren Fläche bestmöglich erreicht, unabhängig davon, welche spezielle sphärische, astigmatische oder prismatische Wirkung gefordert ist.

Als Randbedingung für die spezielle Optimierung gehen z.B. ein:
- individuelle dioptrische Werte im Fern- und Nahpunkt (links/rechts)
- Hornhaut-Scheitelabstand
- unterschiedliche geforderte Eigenvergrößerung rechts/links (Aniseikonie)
- Vorneigung der Fassung
- Fassungsform
- Zentrierung
- Pupillendistanz
- spezielle Gebrauchssituationen
- für rechtes und linkes Auge unterschiedliche Wirkungen mit Auswirkung auf den Ausgleich prismatischer Nebenwirkungen.

Dabei bedeutet die Optimierung nach speziellen Gebrauchssituationen, daß man verschiedene Familien von Flächendesigns bildet.

Eine Designfamilie ist im Sinne dieser Erfindung eine Menge von einer oder einigen wenigen freiformbaren Startfläche und mathematisch beschriebenen Bewertungen für die Abweichungen der dioptrischen Wirkung der zu fertigenden Brillenlinse von den Zielvorgaben. Weiterhin wird eine mathematisch beschriebene Regel, für welche Rezeptforderung, welche der grob gestuften Standard-Vorderseiten, welche Startfläche und welche Bewertungen für die Optimierung zu verwenden sind, dem Design zugeordnet.

In der Regel wird ein Hersteller durch diese Erfindung in die Lage gesetzt, neben einer Universal-Gleitsichtglasfamilie auch Speziallösungen für die Bildschirmarbeit, für Autofahrer und für andere Spezialanforderungen kostengünstig herzustellen.

Ein derartiger Optimierungsprozeß ausgehend von grob gestuften Startflächen kann so vorbereitet werden, daß er für alle Bereiche üblicher Verschreibungen ohne Interaktion eines im Design erfahrenen Fachmanns vernünftige Ergebnisse liefert.

In den Fällen stark unterschiedlicher Größenwahrnehmung beider Augen (Aniseikonie) oder anderer ungewöhnlich starker Abweichungen zwischen beiden Augen, kann eine Verbesserung durch individuelle Optimierung erreicht werden. Dabei ist dann die Interaktion eines im Design erfahrenen Fachmanns erforderlich.

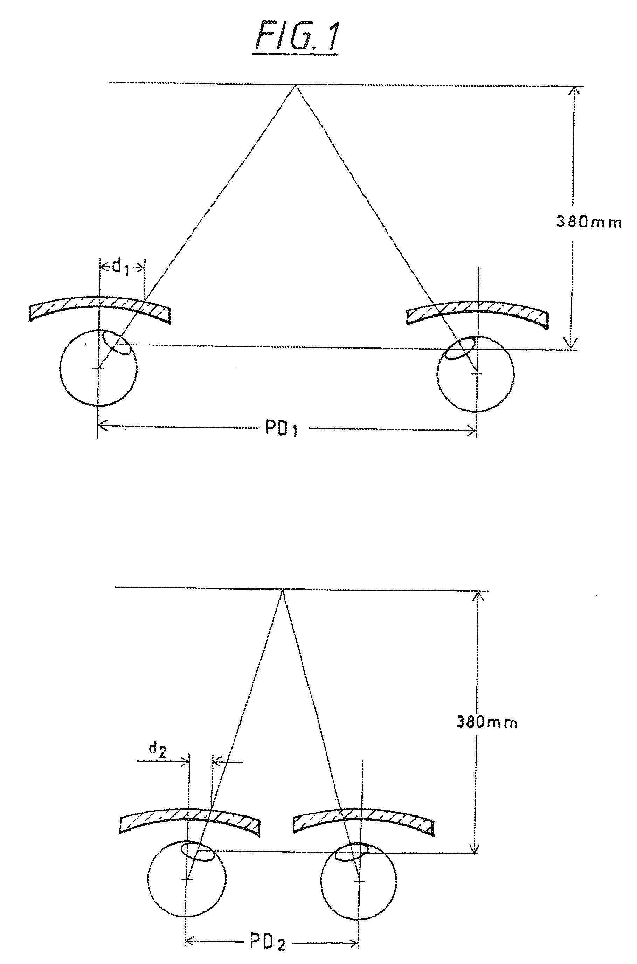

Derzeit sind Gleitsichtgläser immer für eine Standardpupillendistanz ausgelegt. Die Größenordnung der Abweichung von der Optimallage ist in Figur 1 dargestellt.

Da Gleitsichtgläser nicht verdreht eingebaut werden dürfen, entfällt die bei Bifokal- oder Trifokalgläsern angewandte Methode des definierten Verdrehens. Die Anpassung auf den individuellen Rezeptwert kann durch eine spezielle Optimierung der Freiformfläche (Rückfläche der Brillenlinse) erreicht werden.

Die Erfindung besteht darin, dass zum Haltern der Rohlinge mit sphärischen oder auch rotationssymmetrischen asphärischen Vorderflächen in der Bearbeitungsmaschine Vakuumspannfutter mit angepasster Spannfläche verwendet werden.

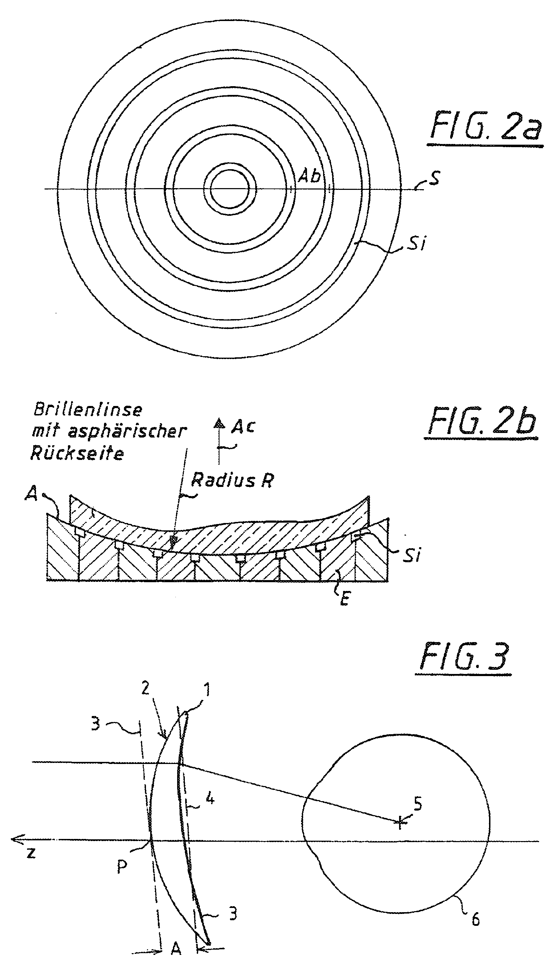

Eine Ausführungsform eines Spannfutters mit festem Radius R der Anlagefläche ist in Fig. 2a und b dargestellt. In die Anlagefläche A sind ringförmige Sicken Si eingearbeitet in denen ein Vakuum erzeugt werden kann. Ringförmige Auflageelemente (E) der Anlagefläche sind in der Fig. 2b sichtbar.

Die Zentrierung der Rohlinge kann entweder mit einer zusätzlichen Zentriervorrichtung z.B. bestehend aus drei gegen den Rand des Rohlings schwenkenden Zentrierstiften erfolgen. Alternativ kann man auch völlig ohne Zentrierung zum Rand des Rohlings arbeiten und stattdessen während der Bearbeitung Marken auf der Fläche anbringen, die eine anschließende Orientierung der Brillenlinse z.B. zum Einschleifen in die Brillenfassung erlauben.

Der derzeit erforderliche, aufwendige Blockvorgang mit niedrig schmelzenden Schwermetallegierungen entfällt. Da nur eine begrenzte Anzahl von z.B. 10 Vorderflächenradien erforderlich ist, kann man einzelne Bearbeitungsmaschinen einem Vorderflächenradius zuordnen und damit diesen Programmausschnitt fertigen.

Die Erfindung läßt sich insbesondere gut mit einer Direktbearbeitung praktizieren. Hiermit ist es möglich, gebrauchsfertige oder fast gebrauchsfertige optische Freiform-Oberflächen herzustellen.

Bei Direktbearbeitung, wie sie in der Anmeldung DE 19 538 274 beschrieben ist, wird von einem Drehprozeß ausgegangen.

Alternativ sind Prozesse mit definierter (Fräsen) oder undefinierter (Schleifen) Schneide denkbar.

Wichtig ist, daß das Werkzeug nur sehr lokal mit dem Werkstück im Eingriff ist. Die Bearbeitungsmaschine muß dabei gewisse Anforderungen hinsichtlich der Präzision erfüllen.

Die optischen Wirkungen eines Lieferprogramms von Sph +10 Dpt. bis -10 Dpt. lassen sich z.B. in 10 Bereichen mit unterschiedlicher Durchbiegung unterbringen.

Das heißt, man benötigt lediglich 10 sphärische Vorderflächen und kann dann alle Gleitsichtglasprogramme für die verschiedenen Anwendungen herstellen, die für dieses Material vorgesehen sind. Die Reduktion in der Lagerhaltung ist offensichtlich.

Im Herstellprozeß fällt das Blocken weg, man kann für jeden Vorderflächenradius z;B. ein Vakuum-Spannfutter vorsehen. Oberflächenveredeiungen, wie z.B. Phototropisierung können auf der Vorderseite schon beim sphärischen Halbfabrikat aufgebracht werden oder bezogen werden.

Gegebenenfalls kann man die Anzahl der Programme leicht erweitern, da nur die entsprechenden Grunddesigns im Rechner erzeugt werden müssen.

Das nun folgende Beispiel stellt eine Durchrechnung rü eine neuartige Brillenlinse (1 in Figur 3) dar, bei welcher folgende Vorgaben berücksichtigt wurden:
Fernteilwirkung: sph 2.5 dpt cyl 2.0 dpt Achse 45 Grad Addition : 2:0 dpt
Brechzahl des Linsenmaterials : 1.600
Linsendurchmesser : 60 mm
Minimale Randdicke der Linse : 0.5 mm
Radius der Vorder-flache der Linse : 92.308 mm(entspricht Flächenbrechwert von 6.5 dpt) mit Sphäre (sph), Zylinder (cyl) und Dioptrie (dpt).

Die Vorderfläche (2) ist eine sphärishce Fläche, wobei für die Lage der Bezugspunkte gilt (Angaben von vorne gesehen bezüglich der geometrischen Mitte):
Bezugspunkte Ferne (2.5 7.0)
Bezugspunkte Nähe : (5.0 -14.0)
Zentrierkreuz : (2.5 4.0)

Die sphärische Vorderfläche (2) berührt die um 6 Grad gekippte Basisebene (3) am Punkt P (2.5 4.0). Damit hat die Vorderfläche (2) bezüglich einer geeigneten Fassung eine Vorneigung von ca. 9 Grad. Die Rückfläche (3) ist eine optimierte Gleitsichtfläche. Die Basisebenen (2, 4) von Vorder-(2) und Rückfläche (3) sind beide um 6 Grad vorgeneigt und haben einen Abstand A von 4.1 mm zueinander. Der Abstand der rückseitigen Basisfläche (3) zum Drehpunkt (5) des Auges (6) beträgt 27,5 mm. In Figur 3 sind diese Verhältnisse zur Verdeutlichung dargestellt.

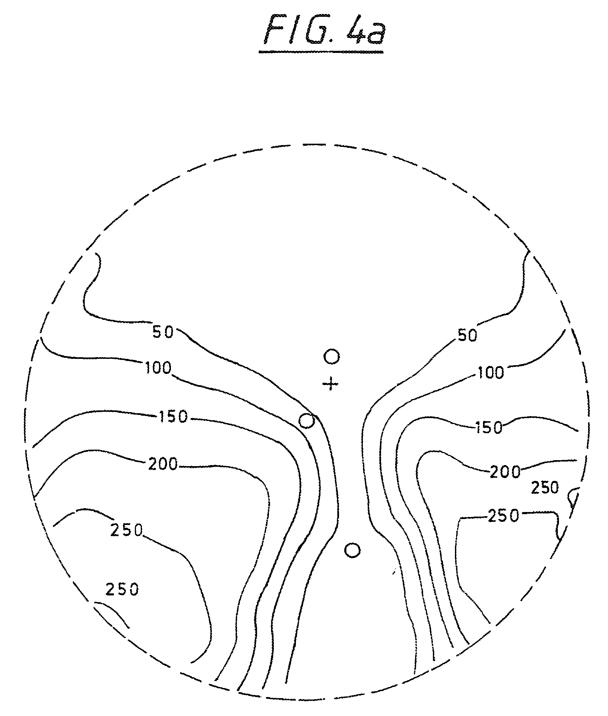

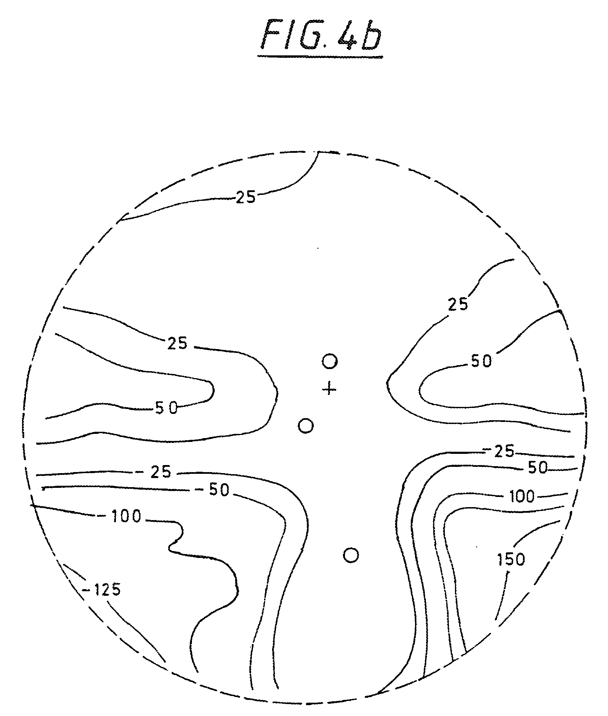

In den Figuren 4a und 4b ist zusätzlich noch die astigmatische (Fig. 4a) und die sphärische (Figur 4b) Abweichung der Linse gemäß dem erfindungsgemäßen Beispiel dargestellt.

Die nachfolgende Tabelle stellt die Pfeilhöhen der Rückflächen (3) und damit der Gleitsichtflächen dar, wobei die Pfeilhöhen von vorn gesehen sind bezüglich einer um 6 Grad gekippte Basisebene. Die Gitterweite beträgt 3.00 mm und der Linsendurchmesser beträgt 60.0 mm. Daraus ergeben sich bei der Berechung folgende Werte:
Linke Hälfte der Linsenrückseite (3):

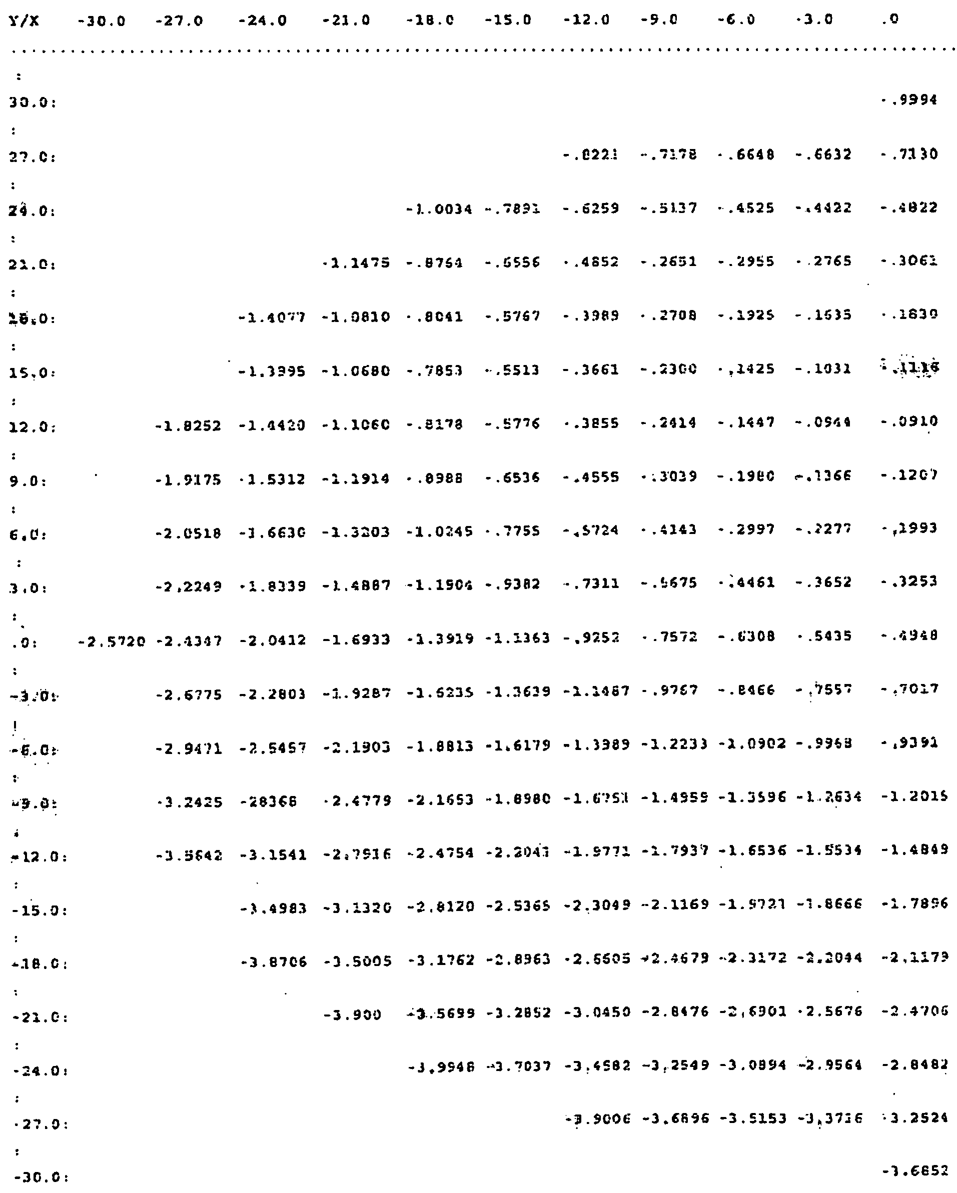

Rechte Hälfte der Linsenrückseite (3) :

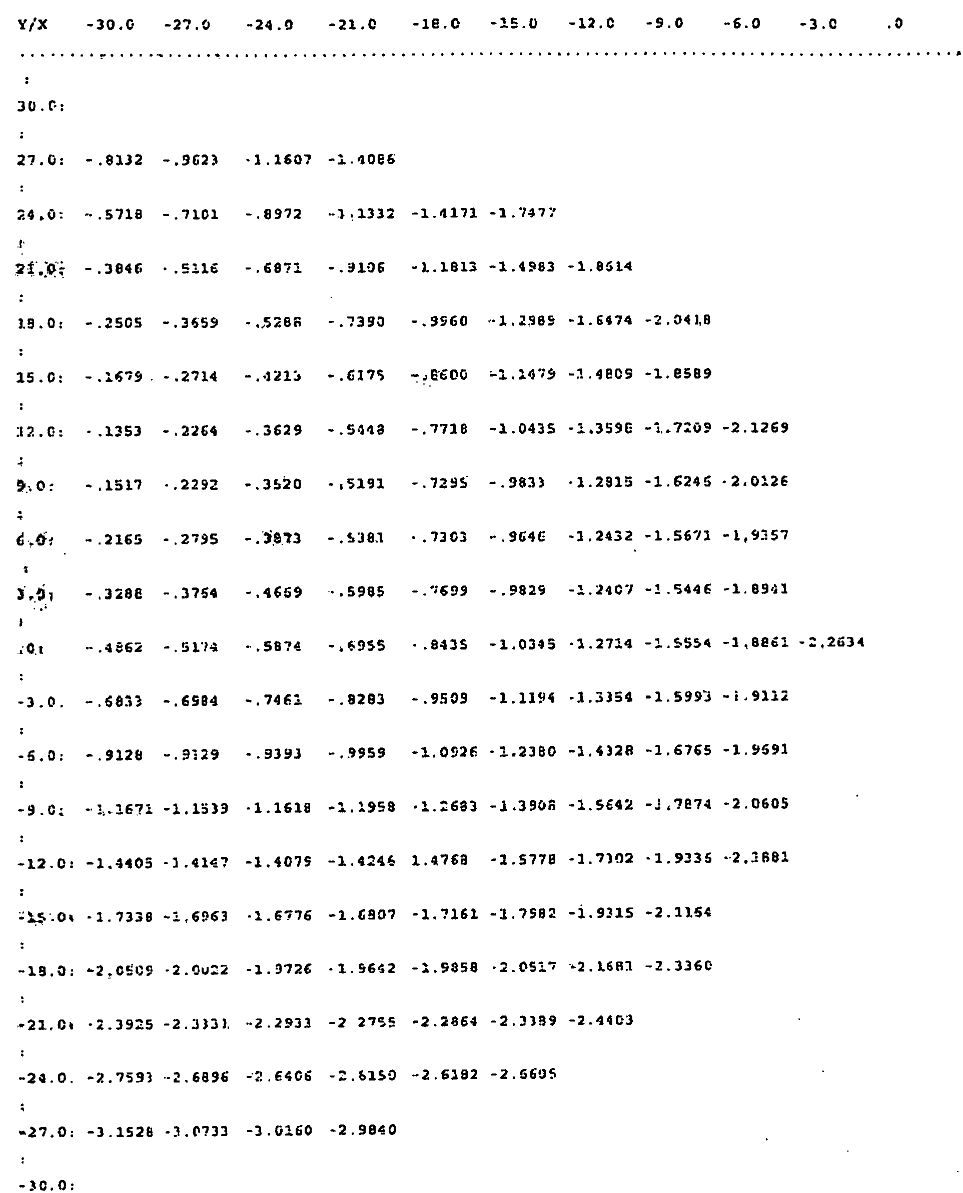

## Patentansprüche

1. Vakuumspannfutter zum Haltern eines Brillenlinsenrohlings mit einer sphärischen Vorderfläche,
- mit einer an die Form der Vorderfläche angepassten sphärischen Anlagefläche (A), wobei
- in die Anlagefläche (A) Sicken (Si) eingearbeitet sind, in denen ein Vakuum erzeugt werden kann, und wobei
- die Anlagefläche (A) einen festen Radius (R) aufweist, **dadurch gekennzeichnet, dass**
- die Sicken (Si) ringförmig ausgebildet sind.

2. Vakuumspannfutter nach Anspruch 1, **dadurch gekennzeichnet, dass** eine Zentriervorrichtung zur Zentrierung des Brillenlinsenrohlings vorgesehen ist.

3. Vakuumspannfutter nach Anspruch 2, **dadurch gekennzeichnet, dass** die Zentriervorrichtung drei gegen den Rand des Brillenlinsenrohlings schwenkende Zentrierstifte aufweist.

## Claims

1. Vacuum chuck for mounting a spectacle lens blank having a spherical front surface,
- having a spherical bearing face (A) which is adapted to the shape of the front surface, wherein
- corrugations (Si) in which a vacuum can be generated are incorporated in the bearing face (A), and wherein
- the bearing face (A) has a fixed radius (R), **characterized in that**
- the corrugations (Si) are configured so as to be annular.

2. Vacuum chuck according to Claim 1, **characterized in that** a centring device for centring the spectacle lens blank is provided.

3. Vacuum chuck according to Claim 2, **characterized in that** the centring device has three centring pins which pivot toward the periphery of the spectacle lens blank.

## Revendications

1. Mandrin à vide pour le maintien d'une ébauche de lentilles de lunettes avec une surface avant sphérique,
- avec une surface d'appui sphérique (A) adaptée à la forme de la surface avant,
- dans la surface d'appui (A) sont réalisées des moulures (Si), dans lesquelles un vide peut être généré et
- la surface d'appui (A) présente un rayon fixe (R),
**caractérisé en ce que**
- les moulures (Si) présentent une forme annulaire.

2. Mandrin à vide selon la revendication 1, **caractérisé en ce qu'**un dispositif de centrage est prévu pour le centrage de l'ébauche de lentilles de lunettes.

3. Mandrin à vide selon la revendication 2, **caractérisé en ce que** le dispositif de centrage comprend trois broches de centrage pivotant contre le bord de l'ébauche de lentilles de lunettes.
